# EUROPEAN PATENT APPLICATION

(11) **EP 3 415 788 A1**
(43) Date of publication of application: **19.12.2018**
(21) Application number: 17750115.2
(22) Date of filing: 30.01.2017
(51) Int. Cl.: F16F 9/56, B60G 17/027, B62K 25/10, F16F 9/32, F16F 9/46

(54) **SHOCK ABSORBER**

(30) Priority: 12.02.2016 JP 2016024376
(71) Applicant: KYB Corporation, Tokyo 105-6111 (JP)
(72) Inventor: HAYASHIGUCHI, Takumi, Tokyo 105-6111 (JP); MOCHIZUKI, Takahisa, Tokyo 105-6111 (JP)
(74) Representative: Grünecker Patent- und Rechtsanwälte PartG mbB
(86) International application number: PCT/JP2017/003218
(87) International publication number: WO 2017/138390

(57) **Abstract**

A shock absorber A includes a suspension spring 2 configured to bias a shock absorber main body 1 in an extension direction, a spring receiver 21 configured to support one end of the suspension spring 2, a jack 3 configured to drive the spring receiver 21, and a stroke sensor 6, wherein the jack 3 includes a housing 33 having a cylinder part 33b provided to the outer periphery of an outer shell 10 of the shock absorber main body 1, and a piston 34 inserted between the outer shell 10 and the cylinder part 33b, and the stroke sensor 6 includes an annular permanent magnet 60 provided to the piston 34, and a sensor part 61 provided to the outer periphery of the housing 33 or between the housing 33 and the outer shell 10, the sensor part 61 being configured to detect an axial direction position of the permanent magnet 60.

## Description

### TECHNICAL FIELD

The present invention relates to a shock absorber.

### BACKGROUND ART

Conventionally, a shock absorber is used to support the rear wheel of a saddle-type vehicle such as a two- or three-wheeled vehicle. A shock absorber disclosed in JP2010-149548A is configured such that the vehicle height can be adjusted by driving, with a jack, a spring receiver that supports one end of a suspension spring called a coil spring.

Specifically, the jack of JP2010-149548A includes a housing, a piston that is movably inserted into the housing and that forms a liquid chamber within the housing, and a pump that supplies a liquid to the liquid chamber. The pump is a reciprocating pump having a single pump chamber, and liquid is supplied to the liquid chamber in a volume obtained by multiplying the piston cross-section area of the pump by the movement distance thereof. Therefore, since the amount of liquid supplied to the liquid chamber can be substantially accurately understood, the position of the spring receiver can be substantially accurately found from the amount of liquid.

### SUMMARY OF INVENTION

In a shock absorber that supports a vehicle, there are cases in which the vehicle height adjustment amount is increased in order to improve the footing when the vehicle is stopped. In such cases, a reciprocating pump is ill suited, and another type of pump called a gear pump is appropriate. However, in a gear pump, internal leakage occurs. Therefore, if this kind of pump is used, the amount of liquid that is supplied from the pump to the liquid chamber cannot be accurately ascertained, and thus the position of the spring receiver cannot be accurately found from the amount of liquid.

In order to find the position of the spring receiver without using the amount of liquid that is supplied from the pump to the liquid chamber, it is also conceivable to attach a stroke sensor to a side part of the spring receiver and detect displacement at one location in the circumferential direction of the spring receiver. However, in a conventional shock absorber, the spring receiver is rotated if the suspension spring is compressed, and thus the stroke sensor is twisted and the axial direction position of the spring receiver cannot be accurately found with the sensor.

An object of the present invention is to provide a shock absorber with which the axial direction position of the spring receiver can be accurately found.

According to one aspect of the present invention, a shock absorber includes a shock absorber main body including an outer shell and a rod inserted into the outer shell movably in an axial direction, a suspension spring configured to bias the shock absorber main body in an extension direction, a spring receiver attached to the outer periphery of the outer shell movably in the axial direction, the spring receiver being configured to support one end of the suspension spring, a jack including a housing having a cylinder part provided to the outer periphery of the outer shell, and a piston inserted between the outer shell and the cylinder part, the jack being configured to drive the spring receiver, and a stroke sensor including an annular permanent magnet provided to the piston, and a sensor part provided to the outer periphery of the housing or between the housing and the outer shell, the sensor part being configured to detect an axial direction position of the permanent magnet.

### BRIEF DESCRIPTION OF DRAWINGS

FIG. 1 is a side surface view illustrating a simplified version of a vehicle provided with a shock absorber according to an embodiment of the present invention;
FIG. 2 is a partial cross-section view of the shock absorber according to the embodiment of the present invention in an unloaded state, wherein a piston is shown in a state of maximum advancement on the right side of the center line, and the piston is shown in a state of maximum retraction on the left side of the center line;
FIG. 3 is a partially enlarged view of FIG. 2;
FIG. 4 is a partially enlarged partial cross-section view of a shock absorber according to an alternative example of the embodiment of the present invention;
FIG. 5 is a partially enlarged partial cross-section view of a shock absorber according to another alternative example of the embodiment of the present invention; and
FIG. 6 is a partially enlarged longitudinal cross-section view of a related shock absorber.

### DESCRIPTION OF EMBODIMENTS

Embodiments of the present invention will now be explained below referring to the drawings. Elements that are assigned the same reference numeral over several drawings indicate identical or corresponding parts.

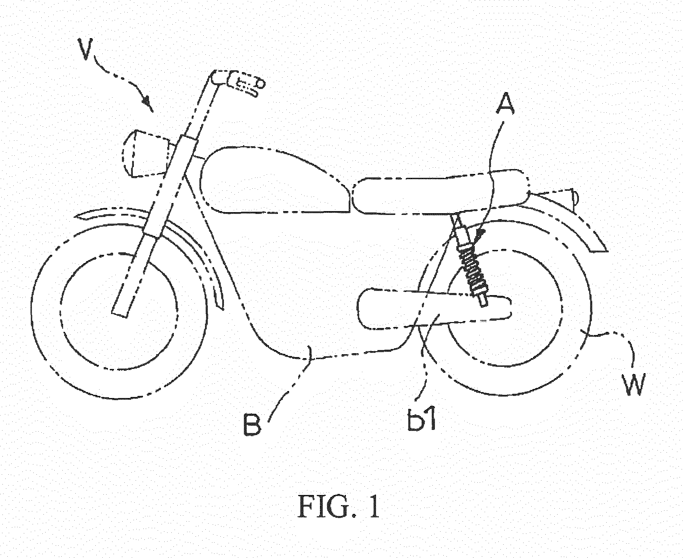

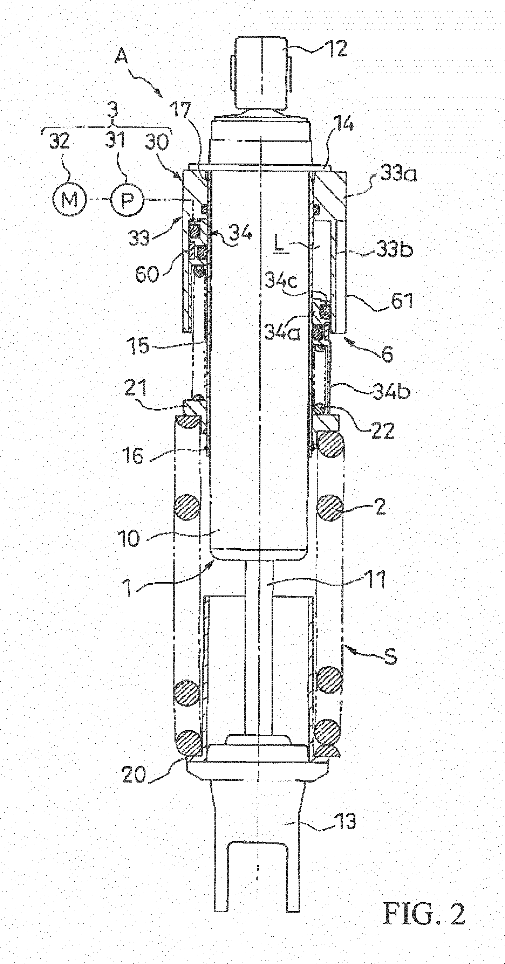

As shown in FIG. 1, a shock absorber A according to an embodiment of the present invention is provided between a vehicle body B and a rear wheel W of an automatic two-wheeled vehicle V serving as a vehicle. As shown in FIG. 2, the shock absorber A includes the following: a shock absorber main body 1; a suspension spring 2 provided on the outer periphery of the shock absorber main body 1; a spring receiver 20 that supports a bottom end (end on the bottom side in FIG. 2) of the suspension spring 2; a spring receiver 21 that supports a top end (end on the top side in FIG. 2) of the suspension spring 2; a jack 3 that adjusts the position of the spring receiver 21; an auxiliary spring 22 provided between the spring receiver 21 and the jack 3; and a stroke sensor 6 that detects the position of the spring receiver 21.

The shock absorber main body 1 includes a cylindrical outer shell 10 and a rod 11 that is movably inserted into the outer shell 10, and the shock absorber main body 1 exerts a damping force that suppresses relative movement in the axial direction of the outer shell 10 and the rod 11. Brackets 12 and 13 are respectively fixed to the outer shell 10 and the rod 11. The bracket 12 that is fixed to the outer shell 10 is connected to the vehicle body B (refer to FIG. 1), and the bracket 13 that is fixed to the rod 11 is connected via a link (not illustrated) to a swing arm b1 (refer to FIG. 1) that supports the rear wheel W. If a shock due to unevenness on the road surface is input to the rear wheel W, the rod 11 moves into and out of the outer shell 10 and the shock absorber main body 1 extends/contracts to exert a damping force. The suspension spring 2 extends/contracts together with the shock absorber main body 1, and thus the shock absorber A extends/contracts.

The suspension spring 2 is a coil spring formed by winding a wire material in a coil shape, and when the suspension spring 2 is compressed, an elastic force against the compression is exerted. The spring receiver 20 is formed in an annular shape and is provided to the outer periphery of the rod 11. Movement of the spring receiver 20 in the downward direction in FIG. 2 relative to the rod 11 is restricted by the bracket 13 on the bottom side in FIG. 2. The spring receiver 21 is formed in an annular shape and is provided to the outer periphery of the outer shell 10. The spring receiver 21 is supported by the auxiliary spring 22 and the jack 3.

In more detail, a flange 14 is fixed protruding toward the outside to the outer periphery at the top end of the outer shell 10, and the outer periphery of the outer shell 10 below the flange 14 in FIG. 2 is covered by a cylindrical guide 15. The spring receiver 21 slidingly contacts the outer periphery of the guide 15, and is freely movable in the axial direction of the outer shell 10. Annular grooves (not assigned a reference numeral) along the circumferential direction are formed in the outer periphery of the guide 15 at both ends in the axial direction, and snap rings 16 and 17 are fitted into each annular groove. On the outer periphery of the guide 15, the spring receiver 21, the auxiliary spring 22, and a jack main body 30 (to be explained later) of the jack 3 are provided so as to be aligned substantially vertically in order from the bottom side in FIG. 2, and these members are prevented from coming off as a whole by the snap rings 16 and 17.

The jack 3 includes: the jack main body 30; a pump 31 that supplies hydraulic oil to the jack main body 30; and a motor 32 that drives the pump 31. The pump 31 and the motor 32 can have any constitution, and any well-known pump and motor constitution can be utilized. Herein, a detailed explanation of the pump 31 and the motor 32 shall be omitted. If a gear pump is used for the pump 31, the pump 31 will be inexpensive and have excellent durability, and can quickly supply hydraulic oil to the jack main body 30.

The jack main body 30 includes: an annular housing 33 that is provided to the outer periphery of the guide 15 so as to surround the guide 15; and an annular piston 34 that is slidably inserted between the housing 33 and the guide 15. A liquid chamber L is formed on the inside of the housing 33 by the piston 34. The housing 33 includes an annular base part 33a and a cylinder part 33b that extends downwards in FIG. 2 from the base part 33a, and the housing 33 is formed in a cylinder shape having a bottom. The housing 33 is disposed so that the base part 33a on the bottom side faces upwards in FIG. 2. The piston 34 includes an annular partition wall part 34a and a cylindrical spacer 34b that extends downwards in FIG. 2 from the outer peripheral part of the partition wall part 34a, and the piston 34 is formed in a cylindrical shape having a bottom. The piston 3 is disposed so that the partition wall part 34a on the bottom side faces upwards in FIG. 2. Further, an annular groove (not assigned a reference numeral) along the circumferential direction is formed on the outer periphery of the partition wall part 34a, and a permanent magnet 60 (to be explained later) of the stroke sensor 6 is fitted into the annular groove.

The space between the base part 33a of the housing 33 and the guide 15, the space between the partition wall part 34a of the piston 34 and the guide 15, and the space between the partition wall part 34a and the cylinder part 33b are plugged by annular O rings (not assigned a reference numeral), respectively. The liquid chamber L is defined by the base part 33a and the cylinder part 33b of the housing 33, the partition wall part 34a of the piston 34, and the guide 15, and hydraulic oil is filled into the liquid chamber L. The liquid chamber L is connected to the pump 31 via a hose or the like. When hydraulic oil is supplied to the liquid chamber L by the pump 31, the piston 34 moves downwards in FIG. 2 and the liquid chamber L expands. Conversely, when hydraulic oil is discharged from the liquid chamber L by the pump 31, the piston 34 moves upwards in FIG. 2 and the liquid chamber L contracts. In the following, movement of the piston 34 in a direction which causes the liquid chamber L to expand will also be referred to as "advancement", and movement of the piston 34 in a direction which causes the liquid chamber L to contract will also be referred to as "retraction".

The auxiliary spring 22 is a coil spring formed by winding a wire material in a coil shape, and when the auxiliary spring 22 is compressed, an elastic force against the compression is exerted. The bottom end (the end on the bottom side in FIG. 2) of the auxiliary spring 22 is supported by the spring receiver 21, and the top end (the end on the top side in FIG. 2) is supported by the partition wall part 34a of the piston 34. The inner diameter of the auxiliary spring 22 is equal to or greater than the inner diameter of the partition wall part 34a, and the outer diameter of the auxiliary spring 22 is equal to or less than the inner diameter of the spacer 34b. Therefore, the auxiliary spring 22 is inserted into the inside of the spacer 34b. When the piston 34 is retracted as shown on the left side in FIG. 2, the auxiliary spring 22 moves into the cylinder part 33b while still being supported by the partition wall part 34a.

As mentioned above, the spring receiver 21 supports the top end of the suspension spring 2, and is freely movable in the axial direction of the outer shell 10. The auxiliary spring 22 is serially connected to the suspension spring 2 via the spring receiver 21. In the following, the configuration consisting of the suspension spring 2, the spring receiver 21, and the auxiliary spring 22 connected in series as described above will be referred to as a spring member S. The elastic force of the spring member S acts on the partition wall part 34a of the piston 34, and the jack main body 30 is pressed to the flange 14 by this elastic force.

The housing 33 of the jack main body 30 is prevented from coming off the guide 15 by the snap ring 17 at the top side in FIG. 2. When the jack main body 30 is pressed to the flange 14 by the elastic force of the spring member S, movement in the axial direction of the guide 15 relative to the outer shell 10 is restricted by the snap ring 17 and the flange 14. The elastic force of the spring member S also acts on the spring receiver 20 at the bottom side in FIG. 2, and the spring receiver 20 is pressed to the bracket 13 by this elastic force. As a result, when the shock absorber main body 1 extends/contracts, the spring member S also extends/contracts, and thus the vehicle body B (FIG. 1) is elastically supported by the spring member S.

FIG. 2 illustrates the shock absorber A in an unloaded state (a state in which a load is not applied to the shock absorber A). The length of the shock absorber A in an unloaded state corresponds to the natural length of the shock absorber A, and therein the shock absorber main body 1 is fully extended. The piston 34 is shown in a state of maximum advancement on the right side of the center line in FIG. 2, and the piston 34 is shown in a state of maximum retraction on the left side.

As shown on the right side of FIG. 2, in the shock absorber A, when the piston 34 has reached maximum advancement in an unloaded state, the spacer 34b of the piston 34 contacts the spring receiver 21. The suspension spring 2 deflects by a fixed amount due to the piston 34 and the auxiliary spring 22, and the initial deflection is imparted to the suspension spring 2. In other words, a predetermined initial load is applied to the suspension spring 2. The shock absorber A may be set so that the piston 34 and the spring receiver 21 separate from each other in a state in which the initial deflection is imparted to the suspension spring 2 so that the top side in FIG. 2 of the spring receiver 21 is supported by only the auxiliary spring 22.

The spring receiver 21 does not interfere with the snap ring 16 at the bottom side in FIG. 2 even in a state in which the piston 34 has reached maximum advancement. Therefore, the spring receiver 21 moves without being obstructed by the snap ring 16. During assembly of the shock absorber A, the snap ring 16 prevents the spring receiver 21 from coming off the guide 15. Therefore, even if the spring receiver 21 receives the elastic force of the auxiliary spring 22, the shock absorber A can be easily assembled.

As shown on the left side of FIG. 2, when the piston 34 has reached maximum retraction in an unloaded state, the piston 34 abuts on the base part 33a of the housing 33 and the lengths of the suspension spring 2 and the auxiliary spring 22 approach their natural lengths (free height). An annular recess 34c is provided to the outer periphery side at the top end part in FIG. 2 of the partition wall part 34a of the piston 34. The recess 34c opposes the opening of a flow passage that connects the liquid chamber L and the hose. Therefore, even in a state in which the piston 34 is butted by the base part 33a, the pressure of the hydraulic oil can be made to act on the recess 34c of the piston 34. In other words, the pressure-receiving surface area of the piston 34 during maximum retraction can be increased. The recess 34c may be provided to the base part 33a side.

The natural length of the auxiliary spring 22 is equal to or greater than a length obtained by subtracting the initial deflection (compressed length) of the suspension spring 2 from the stroke length of the piston 34 (distance that the piston 34 moves from the state of maximum advancement to the state of maximum retraction).

Herein, the operation of the auxiliary spring 22 will now be explained. In the explanation of the auxiliary spring 22, for example, a state in which the piston 34 has reached maximum advancement and an initial load, which imparts an initial deflection X (mm) to the suspension spring 2, is applied to the suspension spring 2 shall be regarded as the optimal state of the shock absorber A, and the stroke length of the piston 34 in this state shall be regarded as Y (mm).

First, a case in which there is no auxiliary spring 22 will be considered as a comparative example. If the stroke length Y of the piston 34 is in a range which does not exceed the initial deflection X of the suspension spring 2, the suspension spring 2 will not enter an idle state even if the piston 34 reaches maximum retraction in an unloaded state. However, in a state in which the auxiliary spring 22 does not exist, if the stroke length Y of the piston 34 is increased so as to increase the vehicle height adjustment amount without modifying the suspension spring 2 and the conditions related to the suspension spring 2 such as the initial load to be applied to the suspension spring 2, the suspension spring 2 may enter an idle state. Specifically, if the stroke length Y exceeds the initial deflection X, the suspension spring 2 may enter an idle state because even if the piston 34 in an unloaded state retracts from the advancement limit causing the suspension spring to extend by X (mm) to its natural length, the piston 34 can retract further by Y-X (mm). Therefore, the suspension spring 2 can move in the axial direction by this surplus retraction (Y-X) amount, and thus will become idle.

In contrast to the above, the shock absorber A is provided with the auxiliary spring 22, and the natural length of the auxiliary spring 22 is longer than a length obtained by subtracting the initial defection X from the stroke length Y of the piston 34, i.e. longer than (Y-X). Therefore, even if the vehicle height adjustment amount is increased without changing the suspension spring 2, the auxiliary spring 22 fills in the gap of the amount that the suspension spring 2 can move in the axial direction (the surplus retraction amount), and thus the suspension spring 2 can be prevented from entering an idle state.

Further, the closed height (axial direction length in a state of maximum compression) of the auxiliary spring 22 is shorter than the axial direction length of the spacer 34b, and the spring constant of the auxiliary spring 22 is significantly less than the spring constant of the suspension spring 2. Herein, the "closed height of the auxiliary spring 22" indicates the axial direction length of the auxiliary spring 22 in a state of maximum compression of the shock absorber A. The "axial direction length" indicates the length in the axial direction. Further, "axial direction position" as used below indicates the position in the axial direction.

The auxiliary spring 22 will now be explained in detail. In a state in which the vehicle weight of a vehicle V (FIG. 1) that is stopped (stationary) on a horizontal ground surface is applied to the shock absorber A, or in other words in a 1G state, the auxiliary spring 22 contracts until the auxiliary spring 22 matches the axial direction length of the spacer 34b. The spring receiver 21 bumps into the distal end of the spacer 34b, and the spring receiver 21 is restricted from approaching the partition wall part 34a. Therefore, compression of the auxiliary spring 22 is obstructed by the spacer 34b, and the spring receiver 21 is supported by the auxiliary spring 22 and the spacer 34b of the piston 34.

In the 1G state, the spring receiver 21 is restricted by the spacer 34b from approaching the partition wall part 34a of the piston 34, and compression of the auxiliary spring 22 is obstructed. Therefore, the spring constant of the spring member S matches the spring constant of the suspension spring 2, and the vehicle body B is substantially supported by only the suspension spring 2. The spacer 34b may be eliminated, and in this case, the auxiliary spring 22 reaches the closed height in the 1G state. In other words, in a passenger 1G state, the spring receiver 21 may be configured to abut on the spacer 34b and the auxiliary spring 22 may be configured to reach the closed height. On the other hand, the suspension spring 2 is set so that the suspension spring 2 does not reach the closed height even if the shock absorber A is in a state of maximum contraction.

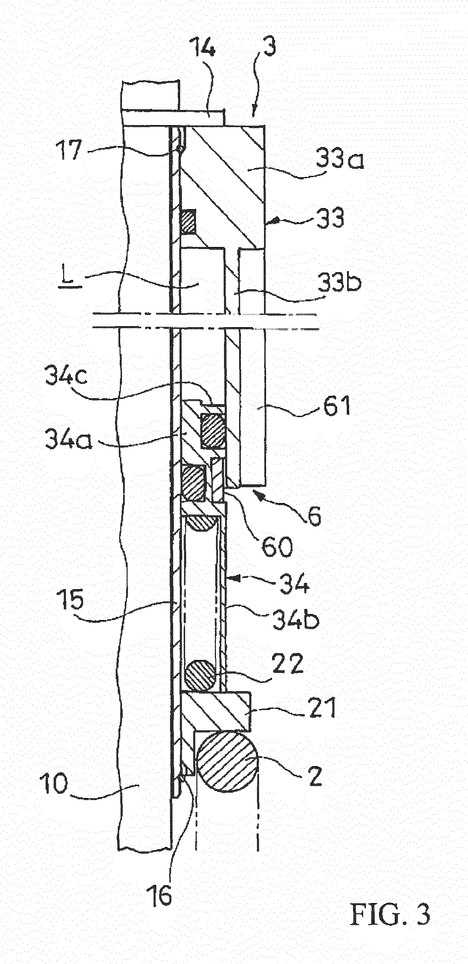

As shown in FIG. 3, the stroke sensor 6 includes: an annular permanent magnet 60 that is fitted to the outer periphery of the piston 34; and a sensor part 61 that is attached to an outside part of the cylinder part 33b of the housing 33 and that detects the axial direction position of the permanent magnet 60. The sensor part 61 is a rod-shaped magnetostrictive sensor. The housing 33 is formed by a non-magnetic body such as aluminum, and the magnetic force line penetrates through the housing 33. The constitution of a magnetostrictive sensor is publicly known, and thus a detailed illustration thereof is omitted, but the magnetostrictive sensor has a magnetostrictive wire and a protective cylinder that covers the outer periphery of the magnetostrictive wire. The magnetostrictive sensor applies a current pulse to the magnetostrictive wire to generate a magnetic field on the outer periphery of the magnetostrictive wire. At this time, an oscillation pulse is generated by the Wiedemann effect in a portion of the magnetostrictive wire that opposes the permanent magnet, and this oscillation pulse propagates through the magnetostrictive wire at a prescribed speed and reaches the detection part. The magnetostrictive sensor outputs an analog or digital electrical signal according to the time from applying the current pulse to detecting the oscillation pulse.

The operation of the shock absorber A of the present embodiment will now be explained below.

When the vehicle V begins traveling, hydraulic oil is supplied to the liquid chamber L by the pump 31, and the piston 34 advances. The piston 34, the auxiliary spring 22, the spring receiver 21, the suspension spring 2, the spring receiver 20, and the bracket 13 move downwards relative to the outer shell 10, and the rod 11 moves out of the outer shell 10 so that the shock absorber A extends. As a result, the vehicle body B is raised. Conversely, if the speed is decreased to stop the vehicle V, hydraulic oil is discharged from the liquid chamber L by the pump 31 and the piston 34 retracts. The piston 34, the auxiliary spring 22, the spring receiver 21, the suspension spring 2, the spring receiver 20, and the bracket 13 move upwards relative to the outer shell 10, and the rod 11 moves into the outer shell 10 so that the shock absorber A contracts. As a result, the vehicle body B is lowered.

When the vehicle V travels during normal travel of the vehicle, specifically in a state in which the vehicle weight, the body weight of the passengers, the weight of the cargo, etc. acts on the shock absorber A, the spring receiver 21 abuts on the spacer 34b of the piston 34 and compression of the auxiliary spring 22 is obstructed by the spacer 34b. Therefore, during normal travel of the vehicle, the spring member S behaves as if it is constituted by only the suspension spring 2. On the other hand, in the case that the shock absorber A fully extends such as when crossing over a step, the auxiliary spring 22 extends to prevent the suspension spring 2 from becoming idle even if the piston 34 reaches a state of maximum retraction.

Further, the vehicle weight and the like are still applied to the shock absorber A even when the vehicle V is stopped, and thus the spring receiver 21 is retained in a state in which it abuts on the spacer 34b.

Moreover, during vehicle height adjustment in which the piston 34 is driven as described above, the vehicle weight and the like are normally applied to the shock absorber A. Therefore, the spring receiver 21 abuts on the spacer 34b of the piston 34 and the spring receiver 21 moves in a state of being supported by the piston 34. In other words, during vehicle height adjustment, the distance between the piston 34 and the spring receiver 21 is fixed, and thus the position of the spring receiver 21 is found from the axial direction position of the piston 34. Further, even if the spring receiver 21 rotates due to the compression of the suspension spring 2 and the piston 34 rotates together with the spring receiver 21, the annular permanent magnet 60 is displaced linearly in a state in which a circumferential direction portion of the permanent magnet 60 opposes the sensor part 61. Therefore, the axial direction positions of the piston 34 and the spring receiver 21 can be detected by the stroke sensor 6. If the position of the spring receiver 21 is detected by the stroke sensor 6, the position of the spring receiver 21 can still be ascertained even if the extension/contraction amount of the suspension spring 2 fluctuates during vehicle travel or the like such that the position of the spring receiver 21 cannot be found from the extension/contraction amount of the shock absorber main body 1. Thus, it is possible to adjust the vehicle height during vehicle travel.

Further, in the shock absorber A, the permanent magnet 60 of the stroke sensor 6 is provided to the piston 34. Therefore, the operation of the shock absorber A as a single unit can be easily confirmed.

This operation confirmation will now be explained in more detail. First, a shock absorber which utilizes a stroke sensor that directly detects the axial direction position of the spring receiver 21 will be considered. If the shock absorber is in the 1G state as described above, the movement distance of the piston 34 is equal to that of the spring receiver 21. Therefore, hydraulic liquid in a volume obtained by multiplying the amount of movement of the spring receiver 21 by the cross-section area of the partition wall part 34a of the piston 34 moves between the pump 31 and the liquid chamber L. However, if the shock absorber is in an unloaded state, even if the piston 34 is made to perform a full stroke, the spring receiver 21 only moves by an amount (X) that the initial load is applied to the suspension spring 2, and the amount of movement of the spring receiver 21 is extremely small relative to the amount of movement of the piston 34. Therefore, in such a shock absorber which utilizes a stroke sensor that directly detects the position of the spring receiver 21, the drive amount of the pump 31 and the amount of movement of the spring receiver 21 do not match upon performing an operation confirmation test of the shock absorber without applying a load to the shock absorber as a single unit. As a result, the operation of the shock absorber cannot be accurately confirmed. In order to accurately confirm the operation of the shock absorber, it is also conceivable to measure the amount of extension/contraction of the auxiliary spring 22 and add this measured value to the movement amount of the spring receiver 21, or to perform an operation confirmation test after attaching the shock absorber to the vehicle body, or to perform an operation confirmation test in a state in which a load is applied to the shock absorber. However, these methods are cumbersome.

In contrast, in the shock absorber A, since the axial direction position of the piston 34 is detected with the stroke sensor 6, the operation of the shock absorber as a single unit can be easily confirmed without the need to perform the operation confirmation test in a state in which a load is applied to the shock absorber A.

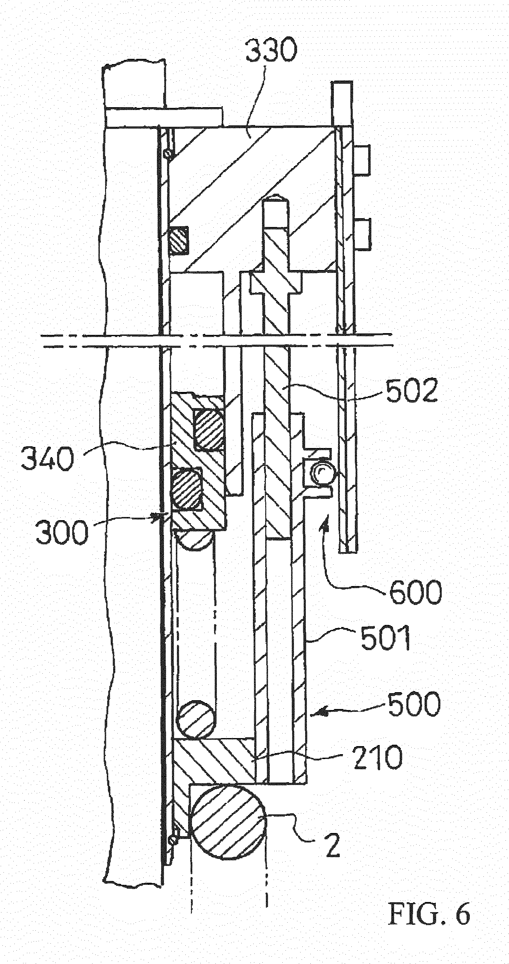

Herein, a related shock absorber proposed in JP2015-150252 shall be explained referring to FIG. 6. FIG. 6 is a longitudinal cross-section view of a shock absorber with which the axial direction position of the spring receiver can be found regardless of the type of pump. As shown in FIG. 6, in this related shock absorber, rotation of a spring receiver 210 is restricted by a rotation stopping member 500, and displacement of the spring receiver 210 is detected by a stroke sensor 600. The rotation stopping member 500 includes: a cylindrical arm 501 that is attached to a side part of the annular spring receiver 210; and a rod 502 that is attached to a housing 330 of a jack 300 and that is slidably inserted into the arm 501.

According to this related shock absorber, a rotational force is input to the spring receiver 210 due to the contraction of the suspension spring 2, but rotation of the spring receiver 210 and the arm 501 is restricted by the rod 502. If the spring receiver 210 moves up or down in FIG. 6 due to the extension/contraction of the suspension spring 2, the rod 502 moves into and out of the arm 501 and the rotation stopping member 500 extends/contracts. In other words, rotation of the spring receiver 210 is restricted by the rotation stopping member 500 while axial direction movement of the spring receiver 210 is permitted. Therefore, even if the stroke sensor 600 is configured to detect axial direction displacement at one location in the circumferential direction of the spring receiver 210, the stroke sensor 600 is not twisted. Thus, the axial direction position of the spring receiver 210 can be accurately found.

However, the rotational force generated by the contraction of the suspension spring 2 acts on the sliding parts of the rod 502 and the arm 501 of the rotation stopping member 500. Therefore, the frictional force between the arm 501 and the rod 502 may increase, and this may make it difficult for the rotation stopping member 500 to extend/contract. If it becomes difficult for the rotation stopping member 500 to extend/contract, the movement speed of the spring receiver 210 on the side that is connected to the rotation stopping member 500 becomes slower than the movement speed on the side that is not connected to the rotation stopping member 500, and thus the spring receiver 210 may tilt relative to the axial direction. If the spring receiver 210 becomes tilted, the load applied to a piston 340 by the jack 300 becomes uneven (unbalanced load), and thus the piston 340 tilts within the housing 330 and abrasion of the piston 340 and the housing 330 may become severe.

In contrast, in the shock absorber A according to the present embodiment, the axial direction position of the spring receiver 21 can easily be detected from the axial direction position of the piston 34 even if the piston 34 rotates. In other words, in the shock absorber A in which a rotational force acts on the piston 34 via the spring receiver 21 when the suspension spring 2 is compressed, it is not necessary to restrict the rotation of the spring receiver 21, and thus the axial direction movement of the spring receiver 21 is not obstructed by a rotation stopping member. Therefore, the spring receiver 21 can be prevented from tilting and causing an unbalanced load to be applied to the piston 34. Accordingly, abrasion of the piston 34 and the housing 33 of the jack 30 can be suppressed.

The operational effects of the shock absorber A according to the present embodiment shall be explained below.

In the present embodiment, the sensor part 61 for detecting the position of the permanent magnet 60 is a magnetostrictive sensor, and the stroke sensor 6 is a magnetostrictive linear displacement sensor. However, the sensor part 61 is not limited to a magnetostrictive sensor and can be appropriately modified. For example, the sensor part 61 may be a magnetic field sensor that detects the position of the permanent magnet 60 using the magnetic flux intensity. In this case, the sensor part 61 may increase in size or it may be necessary to use a permanent magnet 60 having a strong magnetic force, and this can lead to increases in cost. In contrast, if a magnetostrictive sensor is used as the sensor part 61, the cost of the stroke sensor 6 can be reduced.

In the present embodiment, the shock absorber A includes the following: the shock absorber main body 1; the suspension spring 2 that biases the shock absorber main body 1 in the extension direction; the spring receiver 21 that supports one end (the top end in FIG. 2) of the suspension spring 2; the jack 3 that drives the spring receiver 21; and the stroke sensor 6. The shock absorber main body 1 includes the outer shell 10, and the rod 11 that is inserted into the outer shell 10 such that the rod 11 can move in the axial direction. The spring receiver is attached to the outer periphery of the outer shell 10 so that the spring receiver can move freely in the axial direction. The jack 3 includes: the housing 33 having the cylinder part 33b; and the piston 34 that is accommodated in the housing 33. The cylinder part 33b is provided to the outer periphery of the outer shell 10, and the piston 34 is inserted between the outer shell 10 and the cylinder part 33b. The stroke sensor 6 includes: the annular permanent magnet 60 that is provided to the piston 34; and the sensor part 61 that is provided to the outer periphery of the housing 33 and that detects the axial direction position of the permanent magnet 60.

According to the above configuration, even if a rotational force acts on the spring receiver 21 upon compression of the suspension spring 2 and this rotational force is transmitted to the piston 34 causing the piston 34 to rotate, the axial direction position of the spring receiver 21 can still be easily detected from the axial direction position of the piston 34. The axial direction position of each member that constitutes the shock absorber A, such as the spring receiver 21, the piston 34, and the permanent magnet 60, refers to the vertical position of the member in a state in which the axial center line of the shock absorber A is arranged along the vertical direction, i.e. refers to the height of the member.

Herein, in the case that rotation of the spring receiver 210 is restricted with the rotation stopping member 500 as in the related shock absorber shown in FIG. 6, the spring receiver 210 may become tilted due to resistance when the rotation stopping member 500 extends/contracts, causing an unbalanced load to be applied to the piston 340, and if the piston 340 becomes tilted, abrasion of the piston 340 and the housing 330 may become severe. In contrast, in the shock absorber A according to the present embodiment, the axial direction position of the spring receiver 21 can be detected without restricting the rotation of the spring receiver 21, and thus abrasion of the piston 34 and the housing 33 can be suppressed even if the stroke sensor 6 is configured to detect the axial direction position of the spring receiver 21.

Further, according to the above configuration, the axial direction position of the spring receiver 21 can be easily found regardless of the type of the pump 31 that constitutes the jack 3, and thus a pump that is optimal for the vehicle height adjustment amount and the vehicle height adjustment timing can be employed. In particular, if a pump which has internal leakage such as a gear pump or a vane pump is used as the pump 31 that supplies hydraulic oil to the liquid chamber L, the amount of liquid that is supplied from the pump 31 to the liquid chamber L cannot be accurately ascertained. Therefore, it is difficult to find the position of the spring receiver 21 based on the liquid amount. The present embodiment is effective in shock absorbers using this kind of pump 31. When the vehicle is travels or stops upon receiving a signal such as a travel permission or a stop instruction generated by a traffic signal device, the use of a gear pump is suitable for adjusting the vehicle height to obtain a good footing. This is because a gear pump exhibits excellent durability and can have a large discharge amount per unit time, and thus a gear pump can be used over a long period even if the number of times the vehicle height is adjusted is high, and the vehicle height can be adjusted in a short amount of time even if the vehicle height adjustment width is large.

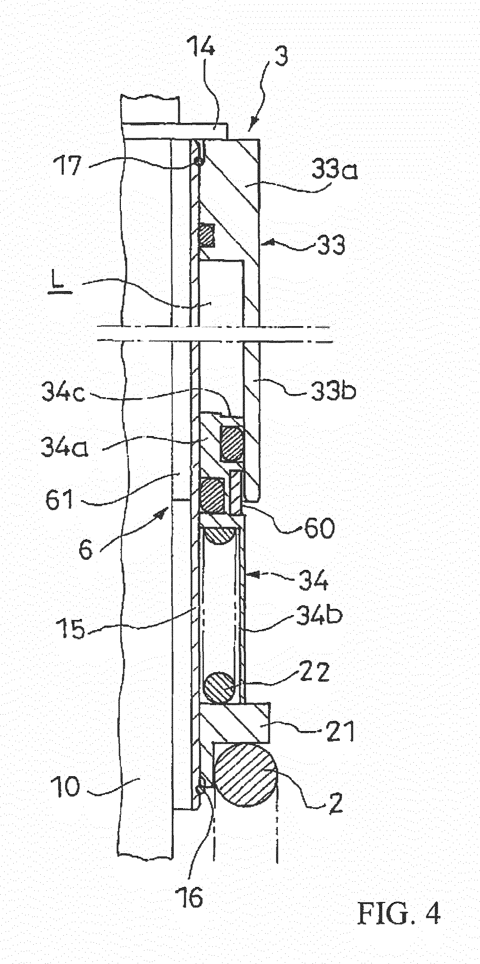

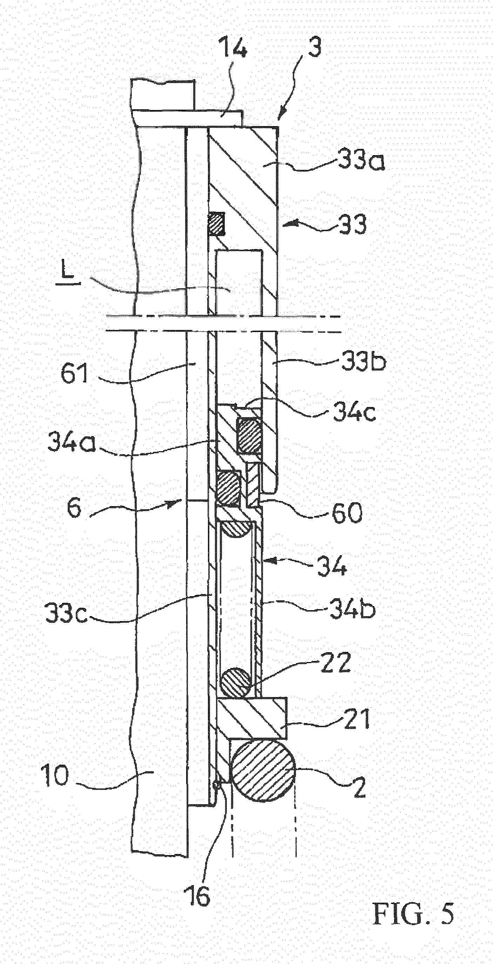

In the present embodiment, the sensor part 61 is provided to the outer periphery of the cylinder part 33b of the housing 33 which is formed by a non-magnetic body, but the sensor part 61 may be provided to the outer periphery of the outer shell 10. In detail, for example, as shown in FIG. 4, the guide 15 is formed by a non-magnetic body, and the sensor part 61 is surrounded by the guide 15. In this case, even though the sensor part 61 is provided to the outer periphery of the outer shell 10, the sensor part 61 does not interfere with the piston 34. Further, as shown in FIG. 5, an inner cylinder part 33c that extends downwards in FIG. 5 from the inner periphery of the base part 33a may be provided to the housing 33, and this inner cylinder part 33c may be used as the guide 15 and the sensor part 61 may be provided between the inner cylinder part 33c and the outer shell 10. In this case, it is preferable to form the housing 33 using a non-magnetic body and to insert the piston 34 between the inner cylinder part 33c and the cylinder part 33b on the outer periphery of the inner cylinder part 33c. If the sensor part 61 is provided between the housing 33 and the outer shell 10 as shown in FIGS. 4 and 5, the sensor part 61 is not exposed, and thus the sensor part 61 can be prevented from getting scratched by flying rocks or the like. If the sensor part 61 is provided to the outer periphery of the housing 33 as shown in FIGS. 2 and 3, a cover that protects the sensor part 61 from flying rocks and the like may be provided.

In the present embodiment, the piston 34 of the jack 3 includes the partition wall part 34a and the spacer 34b, and the auxiliary spring 22 is inserted into the spacer 34b. Therefore, even if the vehicle height adjustment amount is increased without changing the suspension spring 2, the suspension spring 2 can be prevented from entering an idle state. Further, the axial direction length of the spacer 34b of the piston 34 is longer than the closed height of the auxiliary spring 22. Therefore, a load is not applied to the auxiliary spring 22 in a state in which the auxiliary spring 22 has reached the closed height, i.e. a state in which the coil parts (each single winding of the auxiliary spring 22) are in contact with each other. Thus, stress equal to or exceeding a permitted stress can be prevented from acting on the wire material that constitutes the auxiliary spring 22. If the auxiliary spring 22 is provided to the inside of the spacer 34b, the auxiliary spring 22 is disposed between the partition wall part 34a of the piston 34 and the spring receiver 21. Therefore, if the axial direction length of the partition wall part 34a of the piston 34 is increased, the axial direction length of the shock absorber A will also increase. For these reasons, it is difficult to suppress tilting of the piston 34 upon increasing the fitting length of the piston 34 relative to the outer shell 10. In the shock absorber A which comprises the auxiliary spring 22, it is particularly preferable to use the stroke sensor 6 to prevent an unbalanced load from being applied to the piston 34 and thereby suppress tilting of the piston 34.

The constitution of the piston 34 is not limited to that described above, and the piston 34 can be appropriately modified. For example, in the shock absorber A, the partition wall part 34a and the spacer 34b of the piston 34 are integrally formed as a single part. However, these may be formed separately and then integrated by welding, adhesion, screwing, etc. Further, the spacer 34b may be eliminated from the piston 34 and the spacer 34b may be provided to the spring receiver 21, or the auxiliary spring 22 and the spacer 34b may be eliminated. Such modifications are possible regardless of the constitution and attachment position of the sensor part 61.

In the present embodiment, the guide 15 is provided to the outer periphery of the outer shell 10, and the spring receiver 21 and the piston 34 slidingly contact the guide 15. However, the guide member 15 may be eliminated. Specifically, the spring receiver 21 and the piston 34 may slidingly contact the outer periphery of the outer shell 10 directly. In this case, the outer periphery of the outer shell 10 is preferably formed to be smooth.

The shock absorber A is set so that the outer shell 10 is connected to vehicle body B and the rod 1 1 is connected to the rear wheel W, i.e. is set to be an inverted-type shock absorber. However, the shock absorber A may be set to be an upright-type shock absorber. In the shock absorber A when set to the upright type, the outer shell 10 is connected to the rear wheel W and the rod 11 is connected to the vehicle body B.

The shock absorber A is provided between the vehicle body B and the rear wheel W of an automatic two-wheeled vehicle. However, the shock absorber A may be utilized in saddle-type vehicles other than an automatic two-wheeled vehicle, and may also be utilized in an automobile or the like.

The above modifications are possible regardless of the constitution and the attachment position of the sensor part 61, the constitution of the piston 34, and the presence/absence of the auxiliary spring 22 and the spacer 34b.

Embodiments of this invention were described above, but the above embodiments are merely examples of applications of this invention, and the technical scope of this invention is not limited to the specific constitutions of the above embodiments.

This application claims priority based on Japanese Patent Application No.2016-024376 filed with the Japan Patent Office on February 12, 2016, the entire contents of which are incorporated into this specification.

## Claims

1. A shock absorber comprising:
a shock absorber main body including an outer shell and a rod inserted into the outer shell movably in an axial direction;
a suspension spring configured to bias the shock absorber main body in an extension direction;
a spring receiver attached to the outer periphery of the outer shell movably in the axial direction, the spring receiver being configured to support one end of the suspension spring;
a jack including a housing having a cylinder part provided to the outer periphery of the outer shell, and a piston inserted between the outer shell and the cylinder part, the jack being configured to drive the spring receiver; and
a stroke sensor including an annular permanent magnet provided to the piston, and a sensor part provided to the outer periphery of the housing or between the housing and the outer shell, the sensor part being configured to detect an axial direction position of the permanent magnet.

2. The shock absorber according to claim 1, wherein the sensor part is a magnetostrictive sensor.
